# EUROPÄISCHE PATENTANMELDUNG

(11) **EP 4 775 461 A1**
(43) Veröffentlichungstag der Anmeldung: **15.07.2026**
(21) Anmeldenummer: 26150221.5
(22) Anmeldetag: 05.01.2026
(51) Int. Cl.: B60T 7/10, B60T 13/08, B60D 1/145, B60D 1/24, B60T 7/20

(54) **KUPPLUNGSVORRICHTUNG UND BREMSVORRICHTUNG FÜR KRAFTFAHRZEUGANHÄNGER**

(30) Priorität: 10.01.2025 DE 202025000058 U
(71) Anmelder: Knott GmbH, D-83125 Eggstätt (DE)
(72) Erfinder: STRASSER, Josef, 83257 Gstadt am Chiemsee (DE)
(74) Vertreter: Flach Bauer & Partner Patentanwälte mbB

(57) **Zusammenfassung**

Die vorliegende Offenbarung betrifft eine Kupplungsvorrichtung 100 für eine Auflaufbremsvorrichtung 10 für einen Fahrzeuganhänger, wobei die Kupplungsvorrichtung 100 ein erstes und ein zweites Kupplungsteil 110, 120 umfasst, welche in einer ersten Richtung A relativ zueinander beweglich eingerichtet sind, um von einer ersten Stellung in eine zweite Stellung überführt zu werden. In der ersten Stellung sind die Kupplungsteile miteinander derart gekoppelt sind, um eine Bremsbetätigungskraft F zu übertragen, und in der zweiten Stellung sind sie derart voneinander beabstandet, sodass in der zweiten Stellung keine Bremsbetätigungskraft F übertragen wird. Die Kupplungsvorrichtung 100 umfasst weiterhin einen rotatorischen Antrieb 130 und ein Exzenterelement 132. Eine Drehung des Exzenterelements 132 in Drehrichtung R überführt die Kupplungsteile in die zweite Stellung. Zudem ist ein Freilauf vorgesehen, sodass das Exzenterelement 132 entgegen der Drehrichtung R gedreht werden kann, um die Kupplungsteile aus der zweiten Stellung zurück in die erste Stellung zu überführen.

## Beschreibung

### Gebiet der Erfindung

Die Erfindung betrifft eine Kupplungsvorrichtung sowie eine Bremsvorrichtung für Kraftfahrzeuganhänger, umfassend die Kupplungsvorrichtung. Weiterhin betrifft die Erfindung einen Kraftfahrzeuganhänger, welcher die Bremsvorrichtung umfasst.

### Hintergrund

Gebremste Kraftfahrzeuganhänger umfassen typischerweise eine Bremsvorrichtung mit sogenannter Auflaufbremse. Eine Auflaufbremse umfasst beispielsweise ein mechanisches System, das bei Kraftfahrzeuganhängern verwendet wird, um automatisch zumindest eine Radbremse des Kraftfahrzeuganhängers zu betätigen, wenn das Zugfahrzeug in Vorwärtsfahrt abbremst. Als Folge wird auch der Kraftfahrzeuganhänger gebremst. Dieses mechanische System basiert auf der Relativbewegung zwischen Kraftfahrzeuganhänger und Zugfahrzeug.

Wenn das Zugfahrzeug abbremst, verringert sich dessen Geschwindigkeit. Der Kraftfahrzeuganhänger hat aufgrund seiner Massenträgheit zunächst die Tendenz weiterzufahren. Dadurch schiebt er auf das Zugfahrzeug auf, was als "Auflaufen" bezeichnet wird. Diese Relativbewegung wird genutzt, um eine Bremsbetätigungskraft zu erzeugen und zumindest eine Radbremse des Kraftfahrzeuganhängers zu betätigen.

Bekannte Auflaufbremsen umfassen eine sogenannte Auflaufeinrichtung, die beispielsweise am Deichselkopf des Kraftfahrzeuganhängers montiert ist. Sie enthält eine bewegliche Zugstange, die bei einem Auflaufen in Richtung des Kraftfahrzeuganhängers verschoben wird. Diese Relativbewegung wird i.d.R. durch eine mechanische Kraftübertragungsvorrichtung, umfassend ein Bremsgestänge und/oder einen Seilzug auf die zumindest eine Radbremse übertragen. Wird die Zugstange betätigt, wird eine Bremsbetätigungskraft erzeugt (z.B. mittels eines Schwenkhebels) und über die Kraftübertragungsvorrichtung an die zumindest eine Radbremse geleitet, um wiederum diese zu betätigen.

Um die Rückwärtsfahrt des Kraftfahrzeuganhängers zu ermöglichen, kann eine automatische Rückfahrsperre der Auflaufbremse vorgesehen sein. Denn bei der Rückwärtsfahrt würde die Zugstange aufgrund der Trägheit in gleicher Weise betätigt, wie beim Abbremsen des Zugfahrzeugs. Die automatische Rückfahrsperre verhindert, dass die zumindest eine Radbremse beim Rückwärtsfahren unbeabsichtigt aktiviert wird. Hierzu können beispielsweise die Radbremsen (insbesondere Bremstrommeln) und oder der Bremsmechanismus entsprechend konstruiert sein.

Allerdings erfordern diese Systeme in der Regel, dass die Räder auf dem Untergrund fest stehen, sodass die Bremse bei Rückwärtsfahrt gelöst werden kann. Bietet der Untergrund nicht ausreichend Reibung, kann die Bremse nicht gelöst werden.

Weiterhin sind beispielsweise aus EP 3 165 419 B1 aktiv entkoppelbare Auflaufbremsen für Kraftfahrzeuganhänger bekannt. Neben einer mechanischen Kraftübertragungsvorrichtung, die mit der zumindest einen Radbremse in Wirkverbindung steht, umfasst diese Auflaufbremse eine Steuereinheit sowie ein Bewegungserkennungssystem zum Erkennen von Bewegungsinformationen wie Stillstand oder einer Bewegungsrichtung (z.B. Vorwärtsfahrt, Rückwärtsfahrt) des Kraftfahrzeuganhängers.

Die mechanische Kraftübertragungsvorrichtung weist weiterhin eine Kupplungsvorrichtung auf, die derart ausgebildet ist, dass sie in Abhängigkeit der von dem Bewegungserkennungssystem gegebenen Bewegungsinformationen die von der Auflaufbremsvorrichtung erzeugte Bremsbetätigungskraft an die zumindest eine Radbremse entweder weiterleitet oder deren Weiterleitung verhindert. Ist die Kupplungsvorrichtung gelöst, die Weiterleitung der Bremskraft also verhindert, kann der Kraftfahrzeuganhänger rückwärtsgefahren werden, ohne dass es zu einer Bremsung durch die Auflaufbremse kommt.

Diese bekannte Kupplungsvorrichtung umfasst einen Elektromagneten, welcher im Bedarfsfall die Kupplungsvorrichtung löst. Es zeigt sich jedoch, dass diese vorbekannte aktiv entkoppelbare Auflaufbremse nicht immer zuverlässig funktioniert. Insbesondere bei hohen Anhängergewichten erfolgt das Lösen der Kupplungsvorrichtung nicht immer zuverlässig.

### Beschreibung der Erfindung

Vor diesem Hintergrund stellt sich die vorliegende Erfindung die Aufgabe, eine verbesserte Bremsvorrichtung für Kraftfahrzeuganhänger zu schaffen, welche insbesondere das ungewollte Bremsen des Kraftfahrzeuganhängers bei Rückwärtsfahrt zuverlässig verhindert.

Diese Aufgabe wird durch eine erfindungsgemäße Kupplungsvorrichtung, durch eine erfindungsgemäße Bremsvorrichtung und durch einen Kraftfahrzeuganhänger umfassend die erfindungsgemäße Bremsvorrichtung gelöst. Weitere Aspekte der Erfindung sind in den abhängigen Ansprüchen, sowie in der nachfolgenden Beschreibung aufgeführt.

Insbesondere wird die Aufgabe durch eine Kupplungsvorrichtung für eine Auflaufbremsvorrichtung gelöst. Die erfindungsgemäße Kupplungsvorrichtung umfasst ein erstes Kupplungsteil und ein zweites Kupplungsteil. Die Kupplungsteile sind in einer ersten Richtung A relativ zueinander beweglich eingerichtet und können so von einer ersten Stellung in eine zweite Stellung überführt werden.

In der ersten Stellung sind das erste Kupplungsteil und das zweite Kupplungsteil miteinander derart gekoppelt, dass sie eine Bremsbetätigungskraft *F* übertragen können. Die Kopplung kann beispielsweise reibschlüssig und/oder formschlüssig erfolgen.

In der zweiten Stellung sind das erste Kupplungsteil und das zweite Kupplungsteil derart voneinander beabstandet, sodass keine Bremsbetätigungskraft übertragen wird.

Die Bremsbetätigungskraft wird typischerweise mittels einer Zugstange des Kraftfahrzeuganhängers erzeugt. Wird die Zugstange relativ zum Kraftfahrzeuganhänger in Richtung des Kraftfahrzeuganhängers gedrängt (z.B. beim Auflaufen, aufgrund einer Abbremsung des Zugfahrzeugs), wird die Bremsbetätigungskraft erzeugt. Zur Erzeugung der Bremsbetätigungskraft kann weiterhin eine entsprechende Hebelanordnung vorgesehen sein. Über eine Kraftübertragungsvorrichtung und die erfindungsgemäße Kupplungsvorrichtung kann die Bremsbetätigungskraft an die zumindest eine Radbremse des Kraftfahrzeuganhängers geleitet werden - jedenfalls dann, wenn das erste Kupplungsteil und das zweite Kupplungsteil in der ersten Stellung sind. In diesem Fall kommt es zur Bremsung des Kraftfahrzeuganhängers. Sind die beiden Kupplungsteile hingegen in der zweiten Stellung, so ist die Übertragung der Bremsbetätigungskraft unterbrochen. Eine Relativbewegung der Zugstange führt mithin nicht zur Bremsung mittels der zumindest einen Radbremse. Das Einnehmen der zweiten Stellung ist vorzugsweise auch dann möglich, wenn die Zugstange bereits vollständig eingeschoben ist. Somit ist das ungebremste Rückwärtsfahren nach zuvor erfolgter Bremsung in Vorwärtsfahrt unmittelbar möglich.

Die Kraftübertragungsvorrichtung kann beispielsweise mechanische Elemente umfassen, die die mittels der Zugstange erzeugte Bremsbetätigungskraft an die Radbremse übertragen. Insbesondere kann die Kraftübertragungsvorrichtung zumindest ein Gestänge, zumindest ein Seil, zumindest eine Hebelanordnung, insbesondere Schwenkhebel etc. umfassen.

Erfindungsgemäß umfasst die Kupplungsvorrichtung weiterhin einen rotatorischen Antrieb (beispielsweise einen Elektromotor) und ein Exzenterelement. Optional kann ein Getriebe vorgesehen sein. Das Exzenterelement ist derart mit dem Antrieb gekoppelt, dass eine angetriebene Drehung des Exzenterelements in einer Drehrichtung R das erste Kupplungsteil und das zweite Kupplungsteil in die zweite Stellung überführt. Dabei kann das Exzenterelement das erste und/oder zweite Kupplungsteil direkt antreiben. Ebenso ist es möglich, dass der Antrieb des ersten und/oder zweiten Kupplungsteils indirekt, d.h. über weitere Teile, erfolgt.

Weiterhin umfasst die erfindungsgemäße Kupplungsvorrichtung einen Freilauf. Der Freilauf kann Teil des Antriebs sein oder beispielsweise zwischen Antrieb und Exzenterelement angeordnet sein. Der Freilauf ermöglicht, dass das Exzenterelement entgegen der Drehrichtung R gedreht werden kann, um das erste Kupplungsteil und das zweite Kupplungsteil aus der zweiten Stellung in die erste Stellung zu überführen.

Die erfindungsgemäße Kupplungsvorrichtung bietet die Möglichkeit die Übertragung der Bremsbetätigungskraft zuzulassen (erste Stellung) oder zu verhindern (zweite Stellung). Insbesondere kann die Bremsbetätigungskraft abhängig vom Bewegungszustand des Kraftfahrzeuganhängers übertragen oder nicht übertragen werden. Beispielsweise kann die Kupplungsvorrichtung, bzw. das erste und zweie Kupplungsteil, zur Rückwärtsfahrt des Kraftfahrzeuganhängers in die zweite Stellung überführt werden, sodass trotz dem Vorhandensein einer Auflaufbremsvorrichtung die Radbremsen bei Rückwärtsfahrt zuverlässig frei sind und nicht gebremst werden.

Allgemein kann der Antrieb dann aktiviert und die Kupplungsteile in die zweite Stellung überführt werden, wenn eine Bremsbetätigungskraft, die zwar in eine Kraftübertragungsvorrichtung eingeleitet wird, nicht an die zumindest Radbremse übertragen werden soll. Nach dem Deaktivieren des Antriebs werden die Kupplungsteile wieder in die erste Stellung überführt bzw. gekoppelt, so dass die Bremsbetätigungskraft wieder übertragen werden kann.

Die Kupplungsvorrichtung kann weiterhin zumindest ein elastisches Element umfassen, welches das erste Kupplungsteil und das zweite Kupplungsteil in der ersten Stellung vorspannt. Dieses elastische Element ist beispielsweise eine Druckfeder oder eine Blattfeder. Es können z.B. aus Redundanzgründen auch mehrere elastische Elemente vorgesehen sein. Die Vorspannung der Kopplungsvorrichtung in der ersten Stellung stellt sicher, dass bei stromlosem bzw. deaktivieren Antrieb die Bremsbetätigungskraft übertragen werden kann.

Weiterhin kann die Kupplungsvorrichtung zumindest zwei verschiedene Typen von elastischen Elementen umfasst, welche das erste Kupplungsteil und das zweite Kupplungsteil in der ersten Stellung vorspannen. Beispielsweise kann eine Blattfeder und eine Druckfeder (Spiralfeder) vorgesehen sein. Das Vorsehen unterschiedlicher Typen von elastischen Elementen erhöht die Zuverlässigkeit und Sicherheit.

In einem Aspekt sind das erste Kupplungsteil und das zweite Kupplungsteil in und entgegen einer zweiten Richtung B relativ zueinander verschiebbar eingerichtet, wenn sich das erste Kupplungsteil und das zweite Kupplungsteil in der zweiten Stellung befinden.

Befinden sich das erste und zweite Kupplungsteil in der ersten Stellung sind diese nicht in aber entgegen der zweiten Richtung relativ zueinander verschiebbar. Somit kann die Bremsbetätigungskraft übertragen werden.

Die zweite Richtung kann beispielsweise eine axiale Richtung eines Bremsgestänges sein. Gemäß einem Ausführungsbeispiel sind das erste Kupplungsteil und das zweite Kupplungsteil in dieser zweiten (axialen) Richtung zueinander so verschiebbar, dass durch die Verschiebung der Weg kompensiert werden kann, den die Zugstange beim Auflaufen zurücklegt bzw. dass der Weg kompensiert werden kann, um den ein Bremsgestänge bzw. ein Bremsseil aufgrund der Relativbewegung der Zugstange verschoben wird. Die Kompensation bewirkt, dass die Bremsbetätigungskraft nicht bis zu der zumindest einen Radbremse übertragen wird.

Insbesondere kann das Exzenterelement die beiden Kupplungsteile auseinander bewegen (insbesondere auseinander drücken). Dies ist - im Gegensatz zum Einsatz von Hubmagneten - sehr zuverlässig. Es zeigt sich, dass durch das Exzenterelement auch schwergängige Kupplungsteile zuverlässig von der ersten in die zweite Stellung überführt werden können.

Der Freilauf und das zumindest eine elastische Element ermöglichen, dass die Kupplungsteile im Normalfall in der ersten Stellung sind bzw. zuverlässig in die erste Stellung zurückkehren.

In einem Aspekt der Erfindung sind die erste Richtung A und die zweite Richtung B im Wesentlichen senkrecht zueinander orientiert. Diese Orientierung von erster und zweiter Richtung verhindert, dass das Eigengewicht der Kraftübertragungsvorrichtung, insbesondere eines Bremsgestänges, zu einem Verklemmen der Kupplungsteile führt. Mithin kann eine besonders zuverlässige Kupplungsvorrichtung bereitgestellt werden.

In einem Aspekt weisen das erste Kupplungsteil und das zweite Kupplungsteil eine Verzahnung auf. Diese Verzahnungen greifen in der ersten Stellung ineinander und ermöglicht so die Übertragung der Bremsbetätigungskraft. Anstelle einer Verzahnung kann die Kraftübertragung zwischen dem ersten und zweiten Kupplungsteil beispielsweise auch reibschlüssig erfolgen.

Insbesondere kann die Verzahnung erste Zahnflanken und eine zweite Zahnflanken umfassen. Die ersten Zahnflanken können im Wesentlichen senkrecht zur zweiten Richtung ausgerichtet sein. Diese dienen dann zur Übertragung der Bremsbetätigungskraft. Die zweiten Zahnflanken können einen Winkel β mit der zweiten Richtung B einschließen, der im Bereich von 10° bis 45°, oder im Bereich von 15° bis 30°, oder im Bereich von 20° bis 25° liegt. Diese ermöglichen ein Verschieben der Kupplungsteile entgegen der zweiten Richtung B, wenn die Kupplungsteile in der ersten Stellung sind.

Die ersten und zweiten Zahnflanken bilden beispielsweise eine sägezahnartige Verzahnung. Diese ermöglicht, dass die ersten und zweiten Kupplungsteile in der ersten Stellung die Bremsbetätigungskraft übertragen können. In der der Bremsbetätigungskraft entgegengesetzten Richtung können die ersten und zweiten Kupplungsteile hingegen auch in der ersten Stellung relativ zueinander bewegt werden. Somit kann das erste und/oder zweite Kupplungsteil auch in der ersten Stellung in die jeweilige Ausgangsstellung zurückkehren. Dies ist beispielsweise erforderlich, wenn die Kupplungsteile von der zweiten in die erste Stellung zu einem Zeitpunkt überführt wurden, als diese in der axialen Richtung verschoben waren (d.h. z.B. der Weg der Zugstange beim Auflaufen kompensiert wurde). Die Rückkehr in die Ausgangsstellung (zweite Richtung) erfolgt in Vorwärtsfahrt des Kraftfahrzeuganhängers aufgrund der Trägheit.

In einem Aspekt umfasst die Kupplungsvorrichtung weiterhin ein Stö-βelelement, welches mit dem zweiten Kupplungsteil gekoppelt ist. Das Exzenterelement wirkt in dieser Ausführungsform auf das Stößelelement und somit indirekt auf das zweite Kupplungsteil. Hierdurch können auf einfache Weise das erste und zweite Kupplungsteil durch den rotatorischen Antrieb bzw. durch das Exzenterelement und das Stößelelement von der ersten Stellung in die zweite Stellung überführt werden.

Sobald die Kupplungsteile voneinander gelöst sind und z.B. die Verzahnung nicht mehr greift, können die Kupplungsteile axial in der zweiten Richtung gegeneinander verschoben werden.

Weiterhin kann, gemäß einem weiteren Aspekt, das erste Kupplungsteil eine sich in die zweite Richtung erstreckende längliche Führungsausnehmung aufweisen Das Stößelelement kann durch eine längliche Führungsausnehmung durch das erste Kupplungsteil geführt sein. Bei einer axialen Verschiebung des ersten Kupplungsteils kann das erste Kupplungsteil mit der Führungsausnehmung entlang des Stößelelements gleiten.

Weiterhin kann ein Drehwinkel der angetriebenen Drehung des Exzenterelements zur Überführung des ersten Kupplungsteils und des zweiten Kupplungsteils von der ersten Stellung in die zweite Stellung kleiner sein als 180°, oder kleiner als 160°, oder kleiner als 140°. Es ist mithin nur eine Teildrehung des Exzenterelements nötig, um die Kupplungsteile von der ersten in die zweite Stellung zu überführen, bzw. wieder zurück in die erste Stellung zu führen. Mithin kann schnell zwischen der ersten und der zweiten Stellung umgeschaltet werden.

Weiterhin kann das Exzenterelement derart gestaltet oder angeordnet sein, dass eine Drehung des Antriebs zunächst zu keiner (nennenswerten) Positionsänderung des ersten und/oder zweiten Kupplungsteils führt. Dies ermöglicht es dem Antrieb eine gewisse Drehzahl zu erreichen, bevor eine Kraft aufgebaut werden muss, um die Kupplungsteile von der ersten in die zweite Stellung zu überführen. Somit kann eine sehr zuverlässige Bewegung sichergestellt werden. Zudem kann Verschleiß vermieden werden.

Beispielsweise kann das Exzenterelement in einem ersten Abschnitt eine Außenkontur aufweisen, die im Wesentlichen konzentrisch zur Drehachse D des Exzenterelements ist. In diesem Fall ist der erste Abschnitt einem Drehwinkelbereich zugeordnet, der überschritten wird, wenn das erste Kupplungsteil und das zweite Kupplungsteil in der ersten Stellung sind. Der Antrieb kann also zunächst anlaufen. Erst wenn die Drehung über den ersten Drehwinkelbereich hinausgeht, muss eine Kraft zur Überführung der Kupplungsteile von der ersten in die zweite Stellung aufgebracht werden.

Zusätzlich oder alternativ kann das Exzenterelement derart angeordnet sein, dass es in einem Drehwinkelbereich, der überschritten wird, wenn das erste Kupplungsteil und das zweite Kupplungsteil in der ersten Stellung sind, weder auf das erste noch auf das zweite Kupplungsteil wirkt. In diesem Fall ist das Exzenterelement zunächst nicht im Eingriff, wodurch der Antrieb anlaufen kann. Erst wenn das Exzenterelement mit dem Kupplungsteil(en) direkt oder indirekt in Eingriff kommt, muss eine Kraft zur Überführung der Kupplungsteile von der ersten in die zweite Stellung aufgebracht werden.

Der Drehwinkelbereich der zum Anlaufen des Antriebs dient, endet spätestens bei einem Drehwinkel gleich 20°, oder spätestens bei einem Drehwinkel gleich 15°, oder spätestens bei einem Drehwinkel gleich 10°.

Weiterhin kann die Kupplungsvorrichtung zumindest einen Anschlag umfassen. Der zumindest eine Anschlag kann die Drehung des Exzenterelements begrenzen. Die Begrenzung kann direkt oder indirekt erfolgen. Bei einer direkten Begrenzung kommt der Anschlag unmittelbar mit dem Exzenterelement in Kontakt. Bei einer indirekten Begrenzung wirkt der Anschlag auf ein von dem Exzenterelement verschiedenes Teil, beispielsweise auf den Rotor des Antriebs. Ein erster Anschlag kann der ersten Stellung und ein zweiter Anschlag der zweiten Stellung zugeordnet sein. Somit sind die erste Stellung und die zweite Stellung durch die Drehposition des Exzenterelements definiert.

Die Aufgabe wir weiterhin durch eine Bremsvorrichtung für einen Kraftfahrzeuganhänger gelöst. Die Bremsvorrichtung, insbesondere eine Auflaufbremsvorrichtung, umfasst zumindest eine Zugstange, eine mechanische Kraftübertragungsvorrichtung, zumindest eine Radbremse und eine bereits oben beschriebene Kupplungsvorrichtung. Die Zugstange ist mit einer Kupplung (beispielsweise einer Kugelkupplung) verbunden und relativ beweglich zu einer Anhängerdeichsel angeordnet. Eine Relativbewegung der Zugstange entgegen der Vorwärtsfahrtrichtung des Kraftfahrzeuganhängers (z.B. beim Auflaufen des Anhängers auf das Zugfahrzeug) erzeugt eine Bremsbetätigungskraft, die auf die Kraftübertragungsvorrichtung wirkt. Die Kraftübertragungsvorrichtung ist dazu eingerichtet die Bremsbetätigungskraft auf die Radbremse zu übertragen, um eine Bremskraft zu erzeugen. Die Kupplungsvorrichtung ist zwischen der Zugstange und der Radbremse angeordnet. Wie oben bereits beschrieben wurde, kann die Kupplungsvorrichtung die Übertragung der Bremsbetätigungskraft zuzulassen (erste Stellung) oder verhindern (zweite Stellung).

Um den Antrieb der Kupplungsvorrichtung anzusteuern - und somit die Übertragung der Bremsbetätigungskraft zu unterbrechen (bzw. wieder zu ermöglichen) - kann die Bremsvorrichtung weiterhin eine Steuereinheit umfassen, oder mit einer Steuereinheit (beispielsweise des Zugfahrzeugs) verbunden sein.

Weiterhin kann ein Bewegungserkennungssystem vorgesehen sein, oder die Steuereinheit kann mit einem Bewegungserkennungssystem verbunden sein. Das Bewegungserkennungssystem ist dazu eingerichtet Bewegungsinformationen wie Stillstand oder eine Bewegungsrichtung des Zugfahrzeugs und/oder des Kraftfahrzeuganhängers zu erfassen. Basierend auf der erfassten Bewegungsinformation kann die Steuereinheit den Antrieb ansteuern.

Zur Erkennung der Bewegungsinformation kann das Bewegungserkennungssystem entsprechende Sensoren umfassen. Beispielsweise kann eine Reifendrehzahl und/oder Drehrichtung erkannt werden. Ebenso ist es möglich, dass das Bewegungserkennungssystem optische Sensoren, wie Kameras oder Radarsensoren umfasst, um die Bewegungsinformation(en) zu erkennen. Weiterhin ist es möglich, dass das Bewegungserkennungssystem Bewegungsinformationen des Zugfahrzeugs empfängt und an die Steuereinrichtung weiterleitet.

Beispielsweise ist das Bewegungserkennungssystem mit der Steuereinheit zum Signal- bzw. Datenaustausch verbunden. Die Steuereinheit ist weiterhin dazu eingerichtet, den Antrieb der Kupplungsvorrichtung in Abhängigkeit der von dem Bewegungserkennungssystem erzeugten Bewegungsinformationen so anzusteuern, dass die Kupplungsvorrichtung in der ersten Stellung oder zweiten Stellung ist.

Dadurch, dass ein Bewegungserkennungssystem eingesetzt wird, das elektrisch verarbeitbare Signale oder Daten liefert, kann die Steuereinheit entscheiden, ob ein Bremsen des Kraftfahrzeuganhängers gewünscht ist, oder nicht. Die Kupplungsvorrichtung kann entsprechend gesteuert werden, so dass die Bremsbetätigungskraft an die zumindest eine Radbremse weitergeleitet wird oder nicht.

In einem Aspekt umfasst die Kraftübertragungsvorrichtung ein Bremsgestänge. Das Bremsgestänge kann erstes Bremsstangenteil und ein zweites Bremsstangenteil umfassen, wobei das erste Bremsstangenteil mit dem ersten Kupplungsteil und das zweite Bremsstangenteil mit dem zweiten Kupplungsteil fest verbunden ist. Sind die Kupplungsteile in der zweiten Stellung, soll also keine Bremsbetätigungskraft übertragen werden, kann durch eine axiale Verschiebung der Kupplungsteile und mithin der Bremsstangenteile in der zweiten Richtung der Weg kompensiert werden, den die Zugstange beim Auflaufen zurücklegt bzw. kann der Weg kompensiert werden, um den das Bremsgestänge durch Verschwenken eines Schwenkhebels verschoben wird. Die Kompensation bewirkt, dass die Bremsbetätigungskraft nicht bis zu der zumindest einen Radbremse übertragen wird.

Zudem kann die Bremsvorrichtung zumindest ein Federelement umfassen. Dieses Federelement kann zur Aufhängung der Kupplungsvorrichtung dienen. Insbesondere kann die Kupplungsvorrichtung mittels des zumindest eines Federelements schwenkbar an der Deichsel befestigt sein. Diese Aufhängung erlaubt es die Kupplungsvorrichtung so zu verschwenken, dass die zweite Richtung B stets im Wesentlichen parallel zu dem Bremsgestänge ausgerichtet ist. Somit kann ein ungewünschtes Verklemmen der Kupplungsteile bzw. der Bremsstangenteile vermieden werden.

Weiterhin kann die Bremsvorrichtung einen Feststellbremshebel umfassen. Dieser kann dazu dienen die Radbremsen des Kraftfahrzeuganhängers manuell zu betätigen, wenn der Kraftfahrzeuganhänger steht (Feststellbremse). Der Feststellbremshebel wirkt, wie auch die Zugstange, auf die Kraftübertragungsvorrichtung, um eine Bremskraft zu erzeugen.

Der Feststellbremshebel kann so dimensioniert bzw. so eingerichtet sein, dass er die Kraftübertragungsvorrichtung soweit auslenken kann, dass eine Bremsbetätigungskraft auch dann übertragen wird, wenn das erste Kupplungsteil und das zweite Kupplungsteil in der zweiten Stellung sind. Konkret kann der Feststellbremshebel eine größere Verschiebung des Bremsgestänge oder eines Bremsseils bewirken, als die Zugstange. Somit kann die Feststellbremse auch dann aktiv bleiben bzw. aktiviert werden, wenn die Kupplungsvorrichtung versehentlich von der ersten in die zweite Stellung überführt wird, wenn der Kraftfahrzeuganhänger steht bzw. geparkt ist.

Weiterhin kann die Bremsvorrichtung ein manuell einlegbares Rückfahrsperrelement umfassen, welches von einer Sperrstellung in eine Frei-Stellung überführbar ist. In der Sperrstellung sperrt das Rückfahrsperrelement die Relativbewegung der Zugstange entgegen der Vorwärtsfahrtrichtung des Kraftfahrzeuganhängers. In der Frei-Stellung gibt das Rückfahrsperrelement die Relativbewegung wieder frei. Zudem kann das Rückfahrsperrelement mittels eines elastischen Elements (z.B. einer Feder) derart vorgespannt sein, dass es von der Sperrstellung in die Frei-Stellung überführt wird, wenn der Kraftfahrzeuganhänger (wieder) in Vorwärtsfahrtrichtung gezogen wird. Durch die Sperrung der Relativbewegung der Zugstange kann die Erzeugung der Bremsbetätigungskraft verhindert werden, oder es kann erreicht werden, dass nur eine geringe Bremsbetätigungskraft erzeugt wird. Somit kann ein ungewolltes Bremsen in Rückwärtsfahrt vermieden werden.

Die Aufgabe wird weiterhin durch einen Kraftfahrzeuganhänger gelöst. Dieser umfasst neben zumindest einem Rad die zuvor beschriebene Bremsvorrichtung. Die zumindest eine Radbremse der Bremsvorrichtung ist dabei dem zumindest ein Rad zugeordnet. Der Kraftfahrzeuganhänger kann beispielsweise ein Campinganhänger, ein Wohnanhänger oder ein Transportanhänger, insbesondere ein Pferdeanhänger oder ein Bootsanhänger sein.

### Kurze Beschreibung der Figuren

Die Erfindung wird nachfolgend anhand der beigefügten Figuren beispielhaft näher erläutert. Dabei zeigt
- Figur 1: einen erfindungsgemäßen Kraftfahrzeuganhänger;
- Figur 2: eine erfindungsgemäße Bremsvorrichtung;
- Figur 3A: eine erfindungsgemäße Kupplungsvorrichtung in der ersten Stellung (Ausgangsstellung);
- Figur 3B: eine erfindungsgemäße Kupplungsvorrichtung in der zweiten Stellung (vor Rückwärtsfahrt);
- Figur 3C: eine erfindungsgemäße Kupplungsvorrichtung in der zweiten Stellung (während Rückwärtsfahrt, halber Auflaufweg);
- Figur 3D: eine erfindungsgemäße Kupplungsvorrichtung in der zweiten Stellung (während Rückwärtsfahrt, voller Auflaufweg);
- Figur 3E: eine erfindungsgemäße Kupplungsvorrichtung in der ersten Stellung (am Ende der Rückwärtsfahrt, voller Auflaufweg);
- Figur 3F: eine erfindungsgemäße Kupplungsvorrichtung in der ersten Stellung (während erneuter Vorwärtsfahrt, halber Auflaufweg);
- Figur 4: eine erfindungsgemäße Bremsvorrichtung mit Feststellbremse;
- Figur 5: eine erfindungsgemäße Kupplungsvorrichtung in der zweiten Stellung mit angezogener Feststellbremse;
- Figur 6: eine Detaildarstellung der Kupplungsteile, und
- Figur 7: eine erfindungsgemäße Bremsvorrichtung mit Feststellbremse.

### Beschreibung der Figuren

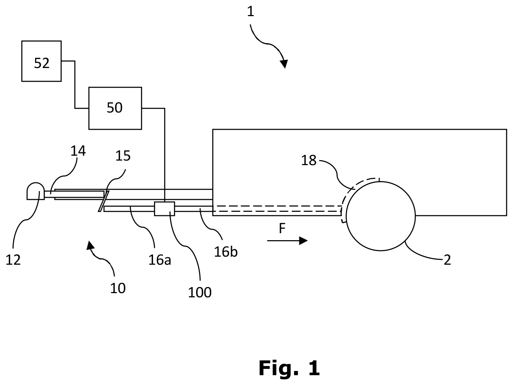

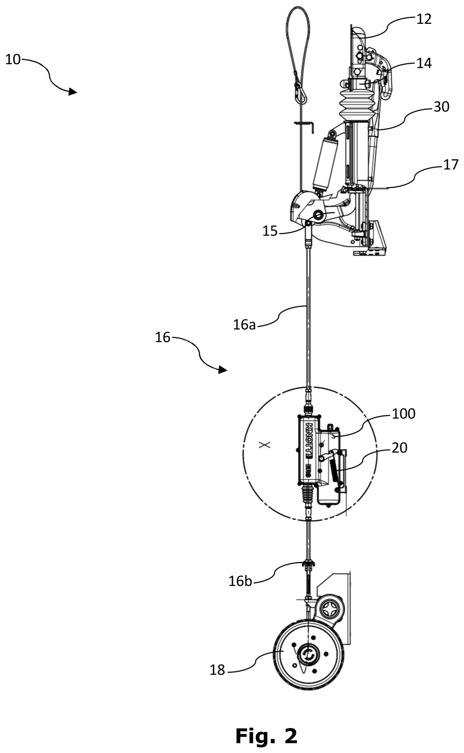

Figur 1 zeigt einen Kraftfahrzeuganhänger 1. Der Kraftfahrzeuganhänger 1 umfasst zumindest ein Rad 2 und kann über eine Kupplung 12, beispielsweise eine Kugelkupplung, mit einem Zugfahrzeug (nicht dargestellt) verbunden werden. Die Kupplung 12 ist mit einer Zugstange 14 verbunden, welche bezüglich eine Anhängerdeichsel 17 beweglich gelagert ist. Insbesondere kann die Zugstange 14 einem Deichselrohr axial verschieblich gelagert sein. Dies ist auch in Figur 2 gezeigt.

Bremst das Zugfahrzeug, wird die Zugstange 14 aufgrund der trägen Masse des Fahrzeuganhängers 1 in Richtung des Fahrzeuganhänger (beispielsweise in das Deichselrohr) verschoben. Diese Relativbewegung initiiert den Bremsvorgang des Fahrzeuganhängers.

Im gezeigten Beispiel wirkt die Zugstange 14 auf eine Schwenkhebelanordnung 15, die wiederum mit einer Kraftübertragungseinrichtung 16 gekoppelt ist. Die Kraftübertragungseinrichtung 16 überträgt die mittels der Zugstange 14 erzeugte Bremsbetätigungskraft F zur Radbremse 18.

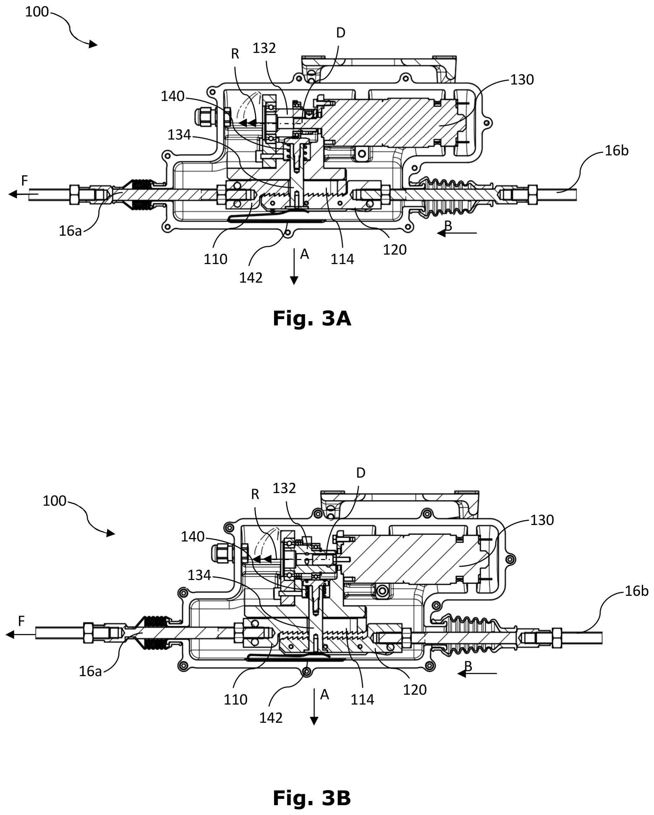

In der in Figur 1 gezeigten Ausführungsform umfasst die Kraftübertragungseinrichtung 16 ein Bremsgestänge, welches einen ersten Bremsstangenteil 16a und einen zweiten Bremsstangenteil 16b umfasst. Die beiden Bremsstangenteile 16a, 16b sind über die Kupplungsvorrichtung 100 koppelbar. Die Kupplungsvorrichtung 100 ist mit Bezug auf die Figuren 3A bis 3F genauer beschrieben und umfasst einen rotatorischen Antrieb, beispielsweise einen Elektroantrieb.

Der Antrieb der Kupplungsvorrichtung 100 kann von einer Steuereinheit 50 angesteuert werden, um die Kupplungsvorrichtung 100 von einer ersten Stellung in eine zweite Stellung zu überführen. Weiterhin ist die Steuereinheit 50 mit einem Bewegungserkennungssystem 52 verbunden. Das Bewegungserkennungssystem 52 ist dazu eingerichtet, Bewegungsinformationen (zum Beispiel: Stillstand, Vorwärtsfahrt, Rückwärtsfahrt, ...) Zu erkennen und an die Steuereinheit 50 zu leiten. In Abhängigkeit der Bewegungsinformationen kann die Steuereinheit 50 den Antrieb der Kupplungsvorrichtung 100 ansteuern.

Figur 2 zeigt eine erfindungsgemäße Bremsvorrichtung 10 eines Kraftfahrzeuganhängers. Die Bremsvorrichtung umfasst eine Kugelkupplung 12, die fest mit einer Zugstange 14 verbunden ist. Die Kugelkupplung 12 kann mit einem Kugelkopf eines Zugfahrzeugs (nicht dargestellt) gekuppelt werden. Die Zugstange 14 ist zur Deichsel 17 des Kraftfahrzeuganhängers längsverschiebbar gelagert. Bremst das Zugfahrzeug, wird die Zugstange 14 durch das Auflaufen des Kraftfahrzeuganhängers relativ zur Deichsel 17 verschoben und ein Bremsvorgang ausgelöst. Die Bremsvorrichtung 10 umfasst weiterhin eine Schwenkhebelanordnung 15. Die Schwenkhebelanordnung 15 übersetzt die in Richtung des Kraftfahrzeuganhängers orientierte Bewegung der Zugstange 12 beim Auflaufen in eine Zugkraft (Bremsbetätigungskraft), die auf die Kraftübertragungseinrichtung 16 wirkt.

Im gezeigten Beispiel umfasst die Kraftübertragungseinrichtung 16 ein erstes Bremsstangenteil 16a und ein zweites Bremsstangenteil 16b, welche über die Kupplungsvorrichtung 100 koppelbar sind. Somit kann die Bremsbetätigungskraft an die Radbremse 18 übertragen werden.

Die Bremsbetätigungskraft kann auch über einen Feststellbremshebel 30 erzeugt werden. Dieser wirkt in bekannter Weise auf die Kraftübertragungseinrichtung 16.

In den Figuren 3A bis 3F ist die Kupplungsvorrichtung 100 in unterschiedlichen Zuständen gezeigt. Die Kupplungsvorrichtung 100 umfasst ein erstes Kupplungsteil 110, welches mit einem ersten Bremsstangenteil 16a verbunden ist. Zudem umfasst die Kupplungsvorrichtung 100 ein zweites Kupplungsteil 120, welches mit einem zweiten Bremsstangenteil 16b verbunden ist. In einer ersten Richtung A sind die beiden Kupplungsteile 110, 120 relativ zueinander beweglich eingerichtet, um von einer ersten Stellung (s. Fig. 3A) in eine zweite Stellung (s. Fig. 3B) überführt zu werden.

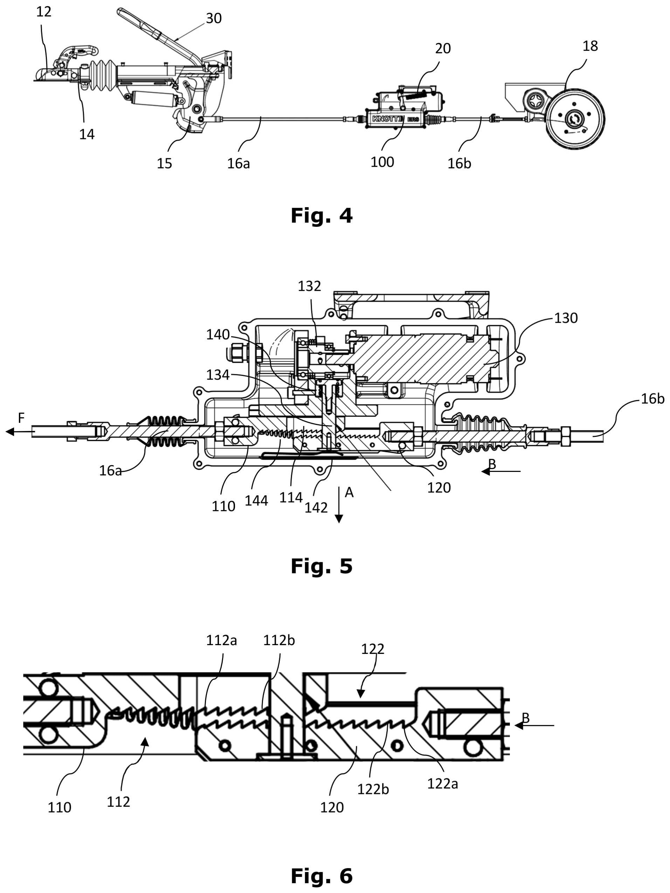

In der ersten Stellung sind die beiden Kupplungsteile 110, 120 über eine Verzahnung (s. Fig. 6) miteinander derart gekoppelt, dass die Bremsbetätigungskraft F zur Radbremse übertragen wird.

In der zweiten Stellung sind die beiden Kupplungsteile 110, 120 voneinander beabstandet, sodass in dieser zweiten Stellung die Bremsbetätigungskraft F nicht übertragen wird.

Die Kupplungsvorrichtung 100 umfasst weiterhin einen rotatorischen Antrieb 130, der beispielsweise einen Elektromotor und optional ein Getriebe umfasst. Der Antrieb 130 ist dazu eingerichtet ein Exzenterelement 132 anzutreiben. Eine angetriebene Drehung des Exzenterelements 132 in einer Drehrichtung R führt dazu, dass das erste Kupplungsteil 110 und das zweite Kupplungsteil 120 von der ersten in die zweite Stellung überführt werden.

Das Exzenterelement 132 kann, wie in der gezeigten Ausführungsform auf ein Stößelelement 134 wirken, welches mit dem zweiten Kupplungsteil gekoppelt ist. Über den Exzenter wird das Stößelelement 134 in Richtung des zweiten Kupplungsteils 120 gedrängt. Diese Bewegung führt schließlich dazu, dass die Kupplungsteile in die zweite Stellung überführt werden, in der die Bremsbetätigungskraft nicht übertragen wird.

Weiterhin kann das Exzenterelement 132 so geformt und/oder angeordnet sein, dass eine Drehung des Antriebs 130 zunächst zu keiner Positionsänderung des ersten und/oder zweiten Kupplungsteils führt. Dies ermöglicht es dem Antrieb eine gewisse Drehzahl zu erreichen, bevor eine Kraft aufgebaut werden muss, um die Kupplungsteile von der ersten in die zweite Stellung zu überführen.

Die Kupplungsvorrichtung 100 umfasst zudem einen Freilauf. Dieser bewirkt, dass das Exzenterelement 132 entgegen der Drehrichtung R gedreht werden kann, um das erste Kupplungsteil 110 und das zweite Kupplungsteil 120 aus der zweiten Stellung zurück in die erste Stellung zu überführen, ohne dass hierzu der Antrieb 130 aktiviert werden muss.

Insbesondere kann die Kupplungsvorrichtung 100 zumindest ein elastisches Element 140, 142 umfassen. Es können auch mehrere, insbesondere verschiedene elastische Elemente 140, 142, vorgesehen sein, welche das erste Kupplungsteil 110 und das zweite Kupplungsteil 120 in der ersten Stellung vorspannen. Im hier gezeigten Ausführungsbeispiel drängt beispielsweise eine Blattfeder 142 das zweite Kupplungsteil 120 gegen das erste Kupplungsteil 110 und somit in die erste Stellung. Zudem ist eine Druckfeder 140 vorgesehen, die das Stößelelement 134 und somit das zweite Kupplungsteil 120 in Richtung der Drehachse des Exzenterelements 132 drängt.

Weiterhin sind das erste Kupplungsteil 110 und das zweite Kupplungsteil 120 in und entgegen der zweiten Richtung B relativ zueinander verschiebbar eingerichtet. Im gezeigten Ausführungsbeispiel kann insbesondere das erste Kupplungsteil 110 in und entgegen der zweiten Richtung B verschoben werden, während das zweite Kupplungsteil 120 über das Stößelelement 134 in der zweiten Richtung festgelegt ist.

Befinden sich das erste Kupplungsteil 110 und das zweite Kupplungsteil 120 in der zweiten Stellung (s. Fig. 3A), kann sich das erste Kupplungsteil 110 in und entgegen der zweiten Richtung B bewegen. In Folge wird auf die mittels der Zugstange 14 erzeugte Bremsbetätigungskraft nicht an die Radbremse 18 übertragen. Kommt es aufgrund einer Rückwärtsfahrt in dieser zweiten Stellung zum Einschieben der Zugstange, wird die Bremsbetätigungskraft nicht übertragen und der Kraftfahrzeuganhänger entsprechend nicht gebremst. Das Rückwärtsfahren ist also möglich.

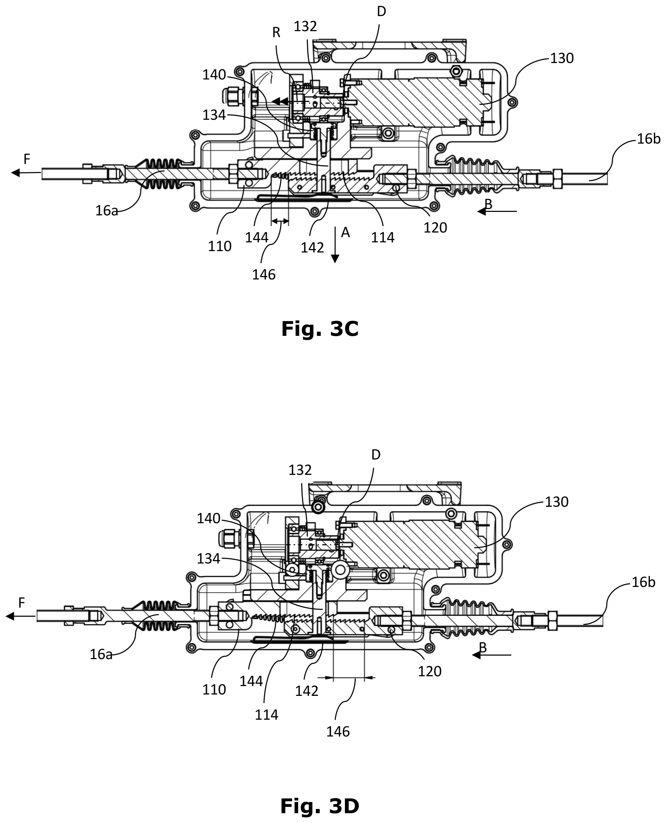

Befindet sich das erste Kupplungsteil 110 und das zweite Kupplungsteil 120 in der ersten Stellung, kann sich das erste Kupplungsteil 110 nicht in der zweiten Richtung relativ zum ersten Kupplungsteil bewegen. In Folge wird die mittels der Zugstange 14 erzeugte Bremsbetätigungskraft über das zweite Kupplungsteil und das Bremsstangenteil 16b an die Radbremse 18 übertragen. Kommt es in Vorwärtsfahrt zum Auflaufen des Kraftfahrzeuganhängers auf das Zugfahrzeug, wird der Kraftfahrzeuganhänger entsprechend gebremst. In der ersten Stellung bleibt das erste Kupplungsteil 110 aufgrund der Verzahnungsgeometrie (s. Fig. 6) aber entgegen der zweiten Richtung relativ zum zweiten Kupplungsteil 120 verschiebbar. Somit kann das erste Kupplungsteil 110 auch in der ersten Stellung in die axiale Ausgangsstellung zurückkehren. In dieser kann das erste Kupplungsteil 110 durch ein elastisches Element 144, insbesondere eine Zugfeder (s. Fig. 3C) vorgespannt sein.

Wie Figur 1 zeigt, sind die erste Richtung A und die zweite Richtung B im Wesentlichen senkrecht zueinander orientiert. Dies verhindert effektiv ein ungewünschtes Verklemmen der Kupplungsteile 110, 120.

Figur 3A zeigt die Kupplungsvorrichtung 100 in einer Ausgangsstellung. Die Kupplungsteile 110, 120 sind in der ersten Stellung und können die Bremsbetätigungskraft F an die Radbremse(n) übertragen. In der zweiten Richtung B sind die Kupplungsteile nicht ausgelenkt. In dieser Ausgangsstellung ist die Radbremse 18 gelöst und die Zugstange 14 vollständig ausgezogen. Kommt es in dieser Ausgangsstellung zu einer Bremsung des Zugfahrzeugs in Vorwärtsfahrtrichtung, wird die Zugstange 14 eingeschoben und es wird eine Bremsbetätigungskraft erzeugt, die über die Kupplungsvorrichtung 100 an die Radbremsen geleitet werden kann. In Folge werden die Radbremsen zugespannt.

Figur 3B zeigt die Kupplungsvorrichtung 100 in der zweiten Stellung. Diese kann eingenommen werden, wenn der Antrieb 130 das Exzenterelement 132 entsprechend rotiert. Hierdurch wird das zweite Kupplungsteil 120 von dem ersten Kupplungsteil 110 abgehoben. In Folge wird die Bremsbetätigungskraft nicht mehr übertragen. Diese zweite Stellung wird beispielsweise dann über den Antrieb eingestellt, wenn ein Stillstand des Kraftfahrzeuganhängers und/oder des Zugfahrzeugs (nach vorangegangener Bremsung) erkannt wurde und/oder eine Rückwärtsfahrt beabsichtigt ist (z.B. wenn der Rückwärtsgang des Zugfahrzeugs eingelegt wird. In der in Figur 3B gezeigten Situation können die Radbremsen noch zugespannt sein.

Figur 3C zeigt die Kupplungsvorrichtung 100 bei beginnender Rückwärtsfahrt. Die Kupplungsteile 110, 120 sind in der zweiten Stellung. Das Einschieben der Zugstange 14, welches die Rückwärtsfahrt bedingt, resultiert in einer Auslenkung 146 des ersten Kupplungsteils. Durch die Auslenkung bzw. Verschiebung kann der Weg kompensiert werden kann, den die Zugstange bzw. das Bremsgestänge 16 zurücklegt. Die Bremsbetätigungskraft wird nicht übertragen und die Radbremsen sind gelöst.

Figur 3D zeigt die Kupplungsvorrichtung 100 während der Rückwärtsfahrt. Die Kupplungsteile 110, 120 sind weiterhin in der zweiten Stellung. Die Zugstange ist vollständig eingeschoben und das erste Kupplungsteil 110 weit ausgelenkt (s. Auslenkung 146). Wie Figur 3D weiter zeigt, ist eine Führungsausnehmung 114 in dem ersten Kupplungsteil 110 durch welche das Stößelelement 134 hindurchgeführt ist so bemessen, dass das Stö-βelelement 134 nicht an dem ersten Kupplungsteil 110 anschlägt. Die Bremsbetätigungskraft wird also nicht übertragen und die Radbremsen sind gelöst.

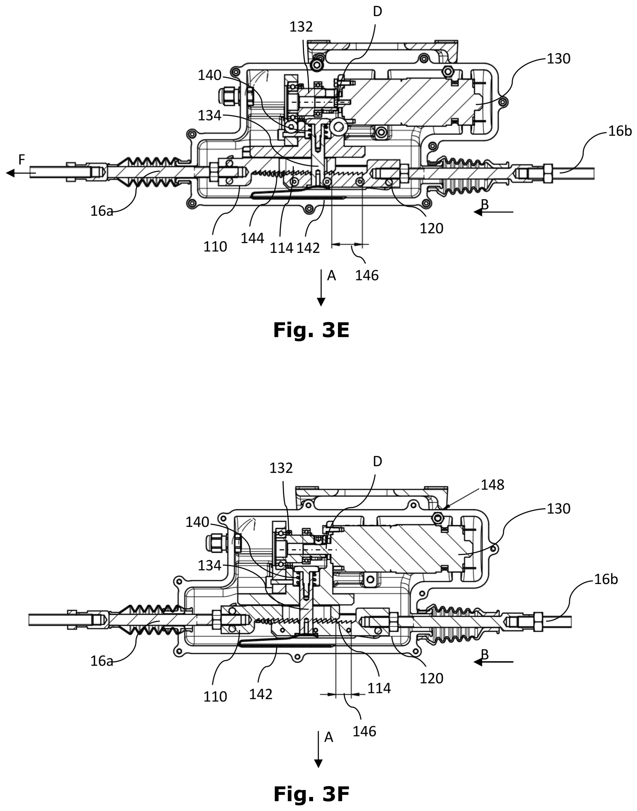

Figur 3E zeigt die Kupplungsvorrichtung 100 bei beendeter Rückwärtsfahrt. Wird dies erkannt (beispielsweise durch Einlegen eines Vorwärtsgangs, oder durch andere Bewegungsinformationen), werden die Kupplungsteile 110, 120 wieder in die erste Stellung überführt. Die axiale Auslenkung in der zweiten Richtung bleibt bestehen. Die Übertragung der Bremsbetätigungskraft ist nun wieder möglich. Setzt die Vorwärtsfahrt ein, wird die Zugstange wieder ausgezogen und das Bremsstangenteil 16a verschiebt das erste Kupplungsteil 110 entgegen der zweiten Richtung, sodass das erste Kupplungsteil auch in die axiale Ausgangslage zurückkehren kann. Dieses Zurückkehren ist in Fig. 3F gezeigt. Weiterhin wird das Zurückkehren in die axiale Ausgangslage durch das Federelement 144 unterstützt.

Figur 4 zeigt eine erfindungsgemäße Bremsvorrichtung 10 mit einer Feststellbremse. Die Zugstange 14 ist in der gezeigten Darstellung voll ausgezogen und die Feststellbremse durch Betätigung des Feststellbremshebels 30 aktiviert. Der Feststellbremshebel 30 lenkt die Kraftübertragungseinrichtung 16 aus und erzeugt so eine Bremsbetätigungskraft unabhängig von der Stellung der Zugstange 14.

Weiterhin zeigt Figur 4, dass die Kupplungsvorrichtung 100 mittels zumindest eines Federelements 20 schwenkbar an der Deichsel befestigt sein kann. Das Federelement 20 kompensiert u.a. das Eigengewicht der Kupplungsvorrichtung 100. Die Schwenkbewegung erlaubt es die Kupplungsvorrichtung 100 zu der Kraftübertragungseinrichtung 16 auszurichten, insbesondere derart, dass die zweite Richtung B parallel zu dem Bremsstangenteil 16a orientiert ist. Wie Fig. 3F zeigt, ist die Schwenkbewegung durch den Anschlag 148 begrenzt.

Wie Figur 5 zeigt, sind der Feststellbremshebel 30 und die Kupplungsvorrichtung 100 so dimensioniert, dass die Feststellbremse durch Betätigung des Feststellbremshebels 30 auch dann aktiviert werden kann oder aktiviert bleibt, wenn die ersten und zweiten Kupplungsteile 110, 120 in der zweiten Stellung sind. Dies wird dadurch erreicht, dass der Feststellbremshebel 30 dazu eingerichtet ist, das Bremsstangenteil 16a weiter auszulenken, als die Zugstange. Zudem ist die Führungsausnehmung 114 in dem ersten Kupplungsteil 110 so bemessen, dass das Stößelelement 134 an dem ersten Kupplungsteil 110 anschlägt, wenn der Feststellbremshebel 30 betätigt wird. Somit kann selbst bei geöffneter Kupplungsvorrichtung die mittels des Feststellbremshebels 30 erzeugte Bremsbetätigungskraft an die Radbremsen übertragen werden.

Figur 6 zeigt die ersten und zweiten Kupplungsteile nochmals im Detail. Wie gezeigt ist, können das erste Kupplungsteil 110 und das zweite Kupplungsteil 120 eine Verzahnung 112, 122 aufweisen. In der ersten Stellung greifen die Verzahnungen 112, 122 ineinander. Die Verzahnung 112, 122 umfasst beispielsweise erste Zahnflanken 112a, 122a und zweite Zahnflanken 112b, 122b. Die ersten Zahnflanken 112a, 122a dienen der Übertragung der Bremsbetätigungskraft und sind im Wesentlichen senkrecht zur zweiten Richtung B ausgerichtet. Die zweiten Zahnflanken 112b, 122b schließen mit der zweiten Richtung B einen Winkel ein, der beispielsweise im Bereich von 10° bis 45° liegt. Dies ermöglicht, dass die Kupplungsteile in der ersten Stellung entgegen der zweiten Richtung übereinander gleiten können.

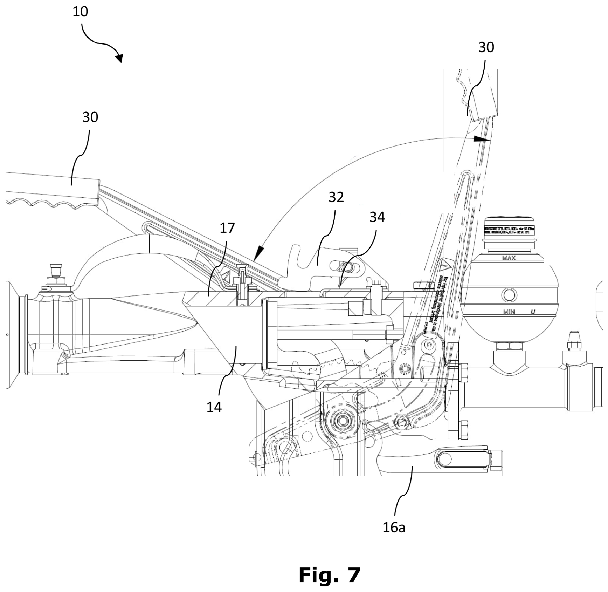

Figur 7 zeigt einen weiteren Aspekt der erfindungsgemäßen Bremsvorrichtung 10 mit einer Feststellbremse. Die Feststellbremse umfasst ein manuell einlegbares Rückfahrsperrelement 32, welches von einer Sperrstellung in Frei-Stellung überführbar ist.

In der Sperrstellung sperrt das Rückfahrsperrelement 32 die Relativbewegung der Zugstange 14 entgegen der Vorwärtsfahrtrichtung des Kraftfahrzeuganhängers 1. In der Frei-Stellung ist die die Relativbewegung der Zugstange 14 freigegeben und die Erzeugung der Bremsbetätigungskraft möglich. Weiterhin kann das Rückfahrsperrelement 32 mittels eines elastischen Elements 34 derart vorgespannt sein, dass es von der Sperrstellung in die Frei-Stellung überführt wird, wenn der Kraftfahrzeuganhänger 1 in Vorwärtsfahrtrichtung gezogen wird. Somit kann sichergestellt werden, dass das Rückfahrsperrelement 32 in der Frei-Stellung ist, wenn der Kraftfahrzeuganhänger gezogen wird.

### Bezugszeichenliste

- 1: Kraftfahrzeuganhänger
- 2: Rad
- 10: Bremsvorrichtung
- 12: Kupplung (z.B. Kugelkopfkupplung)
- 14: Zugstange
- 15: Schwenkhebelanordnung
- 16: Kraftübertragungseinrichtung
- 16a: erstes Bremsstangenteil
- 16b: zweites Bremsstangenteil
- 17: Deichsel
- 18: Radbremse
- 20: Federelement
- 30: Feststellbremshebel
- 32: Rückfahrsperrelement
- 34: elastisches Element
- 50: Steuereinheit
- 52: Bewegungserkennungssystem
- 100: Kupplungsvorrichtung
- 110: erstes Kupplungsteil
- 112: Verzahnung
- 112a: Zahnflanke
- 112b: Zahnflanke
- 114: Führungsausnehmung
- 120: zweites Kupplungsteil
- 122: Verzahnung
- 122a: Zahnflanke
- 122b: Zahnflanke
- 130: rotatorischer Antrieb
- 132: Exzenterelement
- 134: Stößelelement
- 140: elastisches Element (z.B. Druckfeder)
- 142: elastisches Element (z.B. Blattfeder)
- 144: elastisches Element (z.B. Zugfeder)
- 146: Auslenkung
- 148: Anschlag
- A: erste Richtung
- B: zweite Richtung
- D: Drehachse
- F: Bremsbetätigungskraft
- R: Drehrichtung

## Patentansprüche

1. Kupplungsvorrichtung (100) für eine Auflaufbremsvorrichtung (10), wobei die Kupplungsvorrichtung (100) ein erstes Kupplungsteil (110) und ein zweites Kupplungsteil (120) umfasst, welche in einer ersten Richtung (A) relativ zueinander beweglich eingerichtet sind, um von einer ersten Stellung in eine zweite Stellung überführt zu werden, wobei
das erste Kupplungsteil (110) und das zweite Kupplungsteil (120)
- in der ersten Stellung miteinander derart gekoppelt sind, um eine Bremsbetätigungskraft (F) zu übertragen, und
- in der zweiten Stellung derart voneinander beabstandet sind, sodass in der zweiten Stellung keine Bremsbetätigungskraft (F) übertragen wird, wobei
die Kupplungsvorrichtung (100) weiterhin einen rotatorischen Antrieb (130) und ein Exzenterelement (132) umfasst, wobei
das Exzenterelement (132) mit dem Antrieb (130) gekoppelt ist, derart, dass eine angetriebene Drehung des Exzenterelements (132) in einer Drehrichtung (R) das erste Kupplungsteil (110) und das zweite Kupplungsteil (120) in die zweite Stellung überführt, und wobei
die Kupplungsvorrichtung (100) weiterhin einen Freilauf umfasst, sodass das Exzenterelement (132) entgegen der Drehrichtung (R) gedreht werden kann, um das erste Kupplungsteil (110) und das zweite Kupplungsteil (120) aus der zweiten Stellung in die erste Stellung zu überführen.

2. Kupplungsvorrichtung (100) nach Anspruch 1, wobei die Kupplungsvorrichtung (100) zumindest ein elastisches Element (140; 142) umfasst, welches das erste Kupplungsteil (110) und das zweite Kupplungsteil (120) in der ersten Stellung vorspannt.

3. Kupplungsvorrichtung (100) nach Anspruch 1 oder 2, wobei die Kupplungsvorrichtung (100) zumindest zwei verschiedene Typen von elastischen Elementen (140; 142) umfasst, welche das erste Kupplungsteil (110) und das zweite Kupplungsteil (120) in der ersten Stellung vorspannen.

4. Kupplungsvorrichtung (100) nach einem der Ansprüche 1 bis 3, wobei
- das erste Kupplungsteil (110) und das zweite Kupplungsteil (120) in und entgegen einer zweiten Richtung (B) relativ zueinander verschiebbar sind, wenn sich das erste Kupplungsteil (110) und das zweite Kupplungsteil (120) in der zweiten Stellung befinden, und/oder wobei
- das erste Kupplungsteil (110) und das zweite Kupplungsteil (120) nicht in aber entgegen der zweiten Richtung (B) relativ zueinander verschiebbar sind, wenn sich das erste Kupplungsteil (110) und das zweite Kupplungsteil (120) in der ersten Stellung befinden, und wobei
die erste Richtung (A) und die zweite Richtung (B) optional im Wesentlichen senkrecht zueinander orientiert sind.

5. Kupplungsvorrichtung (100) nach einem der Ansprüche 1 bis 4, wobei das erste Kupplungsteil (110) und das zweite Kupplungsteil (120) eine Verzahnung (112; 122) aufweisen, wobei
die Verzahnung (112; 122) erste Zahnflanken (112a; 122a) und zweite Zahnflanken (112b; 122b) umfasst, wobei
die ersten Zahnflanken (112a; 122a) im Wesentlichen senkrecht zur zweiten Richtung (B) ausgerichtet sind, und/oder wobei
die zweiten Zahnflanken (112b; 122b) einen Winkel mit der zweiten Richtung (B) einschließen, der im Bereich von 10° bis 45°, oder im Bereich von 15° bis 30°, oder im Bereich von 20° bis 25° liegt.

6. Kupplungsvorrichtung (100) nach einem der Ansprüche 1 bis 5, wobei das Exzenterelement (132) auf ein Stößelelement (134) wirkt, welches mit dem zweiten Kupplungsteil gekoppelt ist.

7. Kupplungsvorrichtung (100) nach einem der Ansprüche 1 bis 6, wobei ein Drehwinkel der angetriebenen Drehung des Exzenterelements (132) zur Überführung des ersten Kupplungsteils (110) und des zweiten Kupplungsteils (120) von der ersten Stellung in die zweite Stellung kleiner ist als 180°, oder kleiner ist als 160°, oder kleiner ist als 140°.

8. Kupplungsvorrichtung (100) nach einem der Ansprüche 1 bis 7, wobei
das Exzenterelement (132) in einem ersten Abschnitt eine Außenkontur (132a) aufweist, die im Wesentlichen konzentrisch zur Drehachse (D) des Exzenterelements (132) ist, wobei der erste Abschnitt einem Drehwinkelbereich zugeordnet ist, der überschritten wird, wenn das erste Kupplungsteil (110) und das zweite Kupplungsteil (120) in der ersten Stellung sind, und/oder wobei
das Exzenterelement (132) derart angeordnet ist, dass es in einem Drehwinkelbereich, der überschritten wird, wenn das erste Kupplungsteil (110) und das zweite Kupplungsteil (120) in der ersten Stellung sind, weder auf das erste noch auf das zweite Kupplungsteil wirkt, wobei
der Drehwinkelbereich spätestens bei einem Drehwinkel gleich 20°, oder spätestens bei einem Drehwinkel gleich 15°, oder spätestens bei einem Drehwinkel gleich 10° endet.

9. Kupplungsvorrichtung (100) nach einem der Ansprüche 1 bis 8, weiterhin umfassend zumindest einen Anschlag, wobei der zumindest eine Anschlag die Drehung des Exzenterelements (132) begrenzt.

10. Bremsvorrichtung (10), insbesondere Auflaufbremsvorrichtung, für einen Kraftfahrzeuganhänger (1), wobei
die Bremsvorrichtung (10) zumindest eine Zugstange (14), eine mechanische Kraftübertragungsvorrichtung (16), zumindest eine Radbremse (18) und eine Kupplungsvorrichtung (100) nach einem der Ansprüche 1 bis 9 umfasst, wobei
die Zugstange (14) mit einer Kupplung (12) verbunden ist und relativ beweglich zu einer Anhängerdeichsel (17) angeordnet ist, und wobei
die Zugstange zur Erzeugung einer Bremsbetätigungskraft eingerichtet ist, wenn die Zugstange (14) entgegen der Vorwärtsfahrtrichtung des Kraftfahrzeuganhängers (1) verschoben wird, und wobei die Kraftübertragungsvorrichtung (16) dazu eingerichtet ist die Bremsbetätigungskraft (F) auf die Radbremse (18) zu übertragen, um eine Bremskraft zu erzeugen,
und wobei die Kupplungsvorrichtung (100) zwischen der Zugstange (14) und der Radbremse (18) angeordnet ist.

11. Bremsvorrichtung (10) nach Anspruch 12, wobei die Kupplungsvorrichtung (100) mittels zumindest eines Federelements (20) schwenkbar an der Deichsel (17) befestigt ist.

12. Bremsvorrichtung (10) nach Anspruch 10 oder 11, wobei die Kraftübertragungsvorrichtung (16) ein Bremsgestänge umfasst, welches eine erstes Bremsstangenteil (16a) und ein zweites Bremsstangenteil (16b) umfasst, und wobei das erste Bremsstangenteil (16a) mit dem ersten Kupplungsteil (110) und das zweite Bremsstangenteil (16b) mit dem zweiten Kupplungsteil (120) fest verbunden ist.

13. Bremsvorrichtung (10) nach einem der Ansprüche 10 bis 12, wobei
die Bremsvorrichtung (10) weiterhin einen Feststellbremshebel (30) umfasst, welcher dazu eingerichtet ist, auf die Kraftübertragungsvorrichtung (16) zu wirken, um eine Bremskraft zu erzeugen, wobei
der Feststellbremshebel (30) weiter dazu eingerichtet ist, die Kraftübertragungsvorrichtung (16) soweit auslenken zu können, dass eine Bremsbetätigungskraft auch dann übertragen wird, wenn das erste Kupplungsteil (110) und das zweite Kupplungsteil (120) in der zweiten Stellung sind.

14. Bremsvorrichtung (10) nach Anspruch 13, weiterhin umfassend ein manuell einlegbares Rückfahrsperrelement (30), welches von einer Sperrstellung in Frei-Stellung überführbar ist, wobei
das Rückfahrsperrelement (32) in der Sperrstellung die Relativbewegung der Zugstange (14) entgegen der Vorwärtsfahrtrichtung des Kraftfahrzeuganhängers (1) sperrt und in der Frei-Stellung freigibt, wobei das Rückfahrsperrelement (32) mittels zumindest eines elastischen Elements (34) derart vorgespannt ist, dass es von der Sperrstellung in die Frei-Stellung überführt wird, wenn der Kraftfahrzeuganhänger (1) in Vorwärtsfahrtrichtung gezogen wird.

15. Kraftfahrzeuganhänger (1) umfassend zumindest ein Rad und eine Bremsvorrichtung (10) nach einem der Ansprüche 10 bis 14, wobei die zumindest eine Radbremse (18) der Bremsvorrichtung (10) dem zumindest ein Rad (2) zugeordnet ist.
